# EUROPÄISCHE PATENTANMELDUNG

(11) **EP 0 552 855 A1**
(43) Veröffentlichungstag der Anmeldung: **28.07.1993**
(21) Anmeldenummer: 93250021.8
(22) Anmeldetag: 19.01.1993
(51) Int. Cl.: B65G 67/60

(54) **Förderer zum Transport von Massenstückgütern**

(30) Priorität: 20.01.1992 DE 9200576 U
(71) Anmelder: Sudhop, Helmut, Dipl.-Ing., D-28211 Bremen (DE)
(72) Erfinder: Sudhop, Helmut, Dipl.-Ing., D-28211 Bremen (DE)

(57) **Zusammenfassung**

Ein Förderer (1, 2) besteht aus zwei parallel nebeneinander angeordneten Zug- und Tragelementen (8), die durch Umlenkund Ablenkrollen so geführt werden, daß zwei vertikale Transportabschnitte und ein horizontaler Transportabschnitt entstehen. Untereinander sind die Zug- und Tragelemente (8) in regelmäßigen Abständen durch als Mitnehmer für das Fördergut ausgebildete Querverbindungen (7) miteinander verbunden. An den unteren Enden der vertikalen Förderabschnitte befinden sich Stationen zum Ein- bzw. Ausschleusen des Fördergutes. Eine Förderanlage wird von zwei Förderern (1, 2) gebildet, die in einer Tragkonstruktion, bestehend aus einem Portal (11), einem horizontalen Traggerüst (12), einem Förderturm (13) und einem Förderschacht (14), untergebracht und mit der Tragkonstruktion horizontal und vertikal verschieblich sind. Das Fördergut wird hängend in Lastaufnahmeeinrichtungen (3, 4) transportiert oder direkt an entsprechende Aufnahmeelemente des Förderers (1, 2) gehangen.
Beide Förderer (1, 2) können entweder in die gleiche Richtung oder, zur Rückführung leerer Lastaufnahmeeinrichtungen (4), in entgegengesetzte Richtung bewegt werden.

## Beschreibung

Die Erfindung betrifft einen Förderer zum Transport von Massenstückgütern, der zusammen mit einer Tragkonstruktion eine Vorrichtung zum Be- und Entladen, insbesondere von Schiffen bildet, wobei die Massenstückgüter in hängenden Lastaufnahmeeinrichtungen oder direkt am Förderer hängend transportiert werden.

Für den Umschlag von Massenstückgütern mittels Lastaufnahmeeinrichtungen wie Paletten oder Transportbehälter sind Fördersysteme bekannt, die aus einer Kombination von Unstetigförderern mit Stetigförderern bestehen. Bei einer solchen Lösung nach der Patentschrift EP 0 298 147 ist eine Vorrichtung zum Be- und Entladen offenbart, die insbesondere beim Umschlag von Stückgut für Schiffe vorgesehen ist. Dabei werden beladene Paletten durch einen Senkrechtförderer gehoben, auf Förderbänder zum Horizontaltransport übergeben und bis zu einem weiteren Senkrechtförderer bewegt, durch den das Fördergut wieder abgesenkt wird. Die Leistungsfähigkeit eines solchen Umschlaggerätes ist durch die Leistungsfähigkeit der Senkrechtförderer begrenzt. Ein weiterer Nachteil besteht darin, daß bei einer Verlängerung des horizontalen Transportweges ein weiteres Förderband zur Überbrückung des freien Förderabschnittes eingesetzt werden muß. Dieser Förderer ist langsverfahrbar, um die Differenzen bei einer weiteren Verlängerung des horizontalen Förderweges überbrücken zu können. Um ein optimales Zusammenwirken der einzelnen Förderer zu erreichen, ist eine exakte und komplizierte Steuerung erforderlich.

Bei der nach der Patentschrift EP 0 320 068 bekannten Vorrichtung zum Be- und Entladen von Schiffen erfolgt der Transport der Massenstückgüter durch einen einzigen Stetigförderer. Das endlose, umlaufende Zug- und Tragmittel muß so lang sein, daß es für die maximal vorgesehenen vertikalen und horizontalen Förderwege ausreicht. Die bei kürzeren Förderwegen nicht benötigte Länge muß in einem Magazin untergebracht werden. Dort durchläuft das endlose Zug- und zugleich Tragelement mehrere Schleifen in einer aufwendigen Konstruktion.

Hier will die Erfindung Abhilfe schaffen. Die Erfindung, wie sie in den Ansprüchen gekennzeichnet ist, löst die Aufgabe, einen Förderer für Be- und Entladevorrichtungen, insbesondere für Schiffe zu schaffen, der aus einem Stetigförderer mit Zug- und zugleich Tragelementen konstanter Länge ohne ein Speichermagazin besteht, mit denen veränderbare vertikale und horizontale Förderabschnitte realisierbar sind.

Die durch die Erfindung erzielbaren Vorteile sind im wesentlichen darin zu sehen, daß hohe Förderleistungen erreicht werden können und sowohl ein kontinuierlicher als auch intermittierender Transport der beladenen bzw. leeren Lastaufnahmeeinrichtungen oder der direkt angehangenen Massenstückgüter möglich ist. Die Rückführung der entladenen Lastaufnahmeeinrichtungen kann durch die Umkehr der Förderrichtung erreicht werden. Die höchste Umschlagsleistung wird jedoch erzielt, wenn die im Anspruch 3 offenbarte Anordnung von zwei Einzelförderern realisiert wird und so die getrennte Förderung der beladenen und der entladenen Lastaufnahmeeinrichtungen erfolgt. Dabei kann durch die Wahl definierter oder veränderbarer Geschwindigkeiten bzw. kurzfristiges Anhalten ein optimaler Gütertransport gesichert werden. Störungen beim Be- und Entladen bzw. beim Rücktransport sind damit ausgleichbar. In den Einsatzfällen, bei denen kein Rücktransport erforderlich ist, können beide Einzelförderer in einer Richtung gesteuert werden. Das Fördergut wird durch die den Förderer umgebende Stahlkonstruktion vor ungünstigen Witterungseinflüssen geschützt.

Im folgenden wird die Erfindung anhand eines Ausführungsbeispiels und mit Bezug auf die beiliegenden Zeichnungen näher erläutert, wobei
Figur 1 in perspektivischer schematischer Darstellung ein Doppelfördersystem,
Figur 2 in einer Seitenansicht eine Vorrichtung zum Be- und Entladen von Schiffen mit einem erfindungsgemäßen Förderer und
Figur 3 die Vorrichtung nach Figur 2 aus der Sicht von der Wasserseite zeigt.

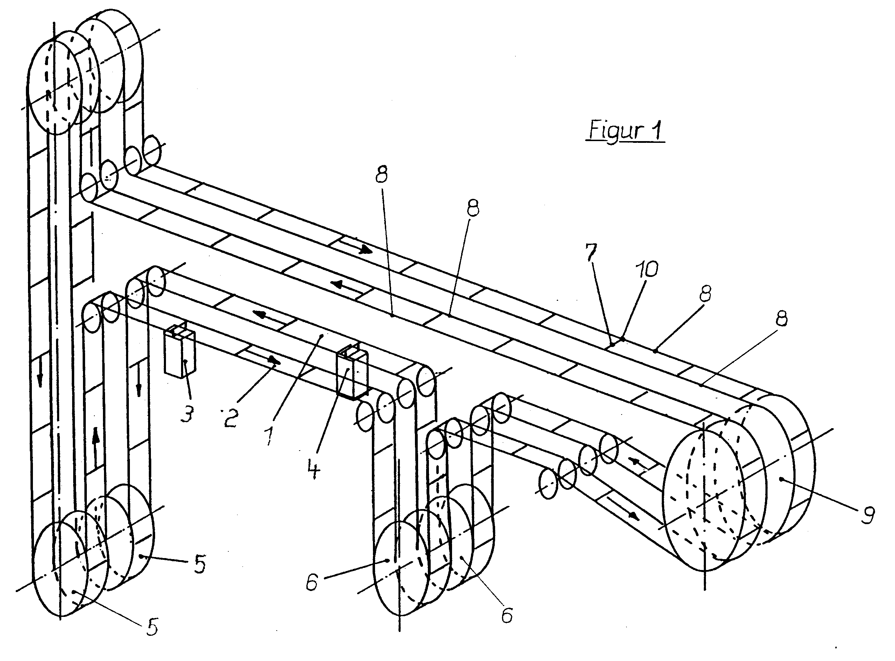

Die beiden Förderer des Doppelförderersystems bestehen nach Figur 1 aus dem Förderer 1 für die Beladung und aus dem Förderer 2 für die Entladung von Schiffen. Jeder Förderer 1 und 2 weist zwei parallel nebeneinander angeordnete Förderseile 8 auf, die zugleich Zug- und Tragelemente sind. Die Förderseile 8 werden durch Umlenk- und Ablenkrollen geführt und von einem Motor 9 angetrieben. Zwischen den beiden Förderseilen 8 jeweils eines Paares sind in definierten Abständen als Mitnehmer- und Tragelemente Querverbindungen 7 vorgesehen, die in den Befestigungen 10 mit den Förderseilen 8 verbunden werden. Durch die Umlenk- und Ablenkrollen wird der Förderer in horizontale und vertikale Förderabschnitte eingeteilt. Die unteren Endpunkte eines vertikalen Förderabschnittes sind verstellbare Stationen 5 und 6 zur Aufnahme bzw. Abgabe von als Förderkörbe 3 und 4 ausgebildete Lastaufnahmeeinrichtungen. Sie können aber auch für die direkte Aufnahme der Massenstückgüter bzw. ihrer Umhüllung vorgesehen werden.

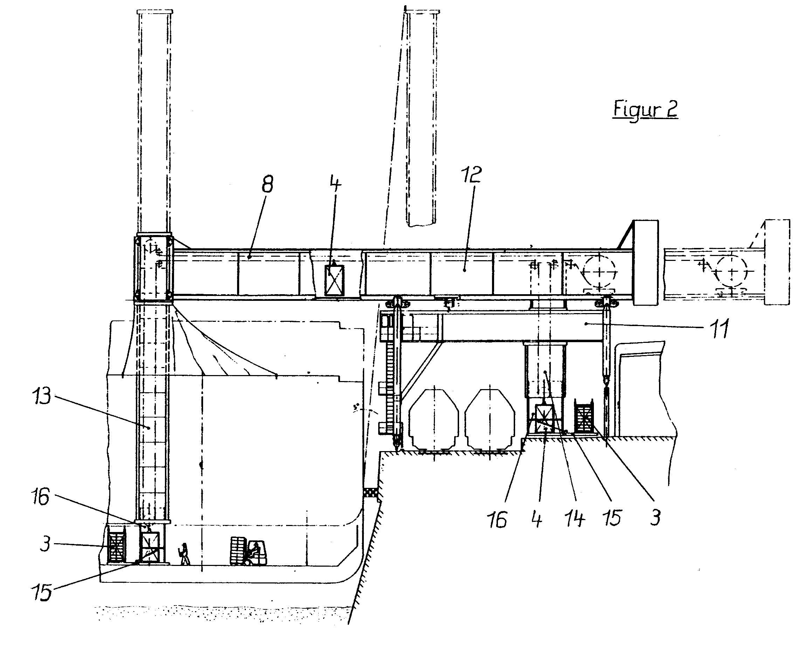

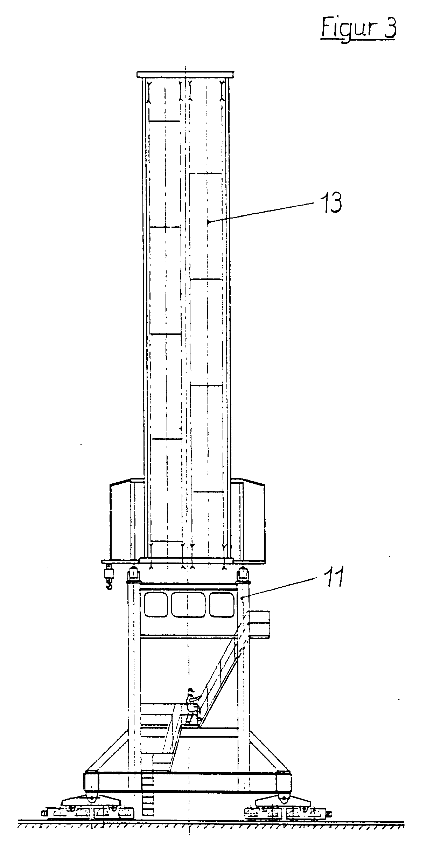

Die beiden Förderer 1 und 2 sind nach Figur 2 in einem Traggerüst angeordnet, welches von einem am Kai verfahrbarem Portal 11 getragen wird, und aus einem quer zur Fahrtrichtung des Portals 11 verschieblichen horizontalen Traggerüst 12 sowie einem in vertikaler Richtung schiffsseitig daran höhenverstellbar angeordnetem Förderturm 13 und einem zweiten, ebenfalls am horizontalen Traggerüst 12 im Bereich des Portals 11 in Längsrichtung dieses Traggerüstes 12 verstellbaren Förderschacht 14. Der Förderturm 13 wird nach Figur 2 in der tiefsten Stellung gezeigt, seine höchste Stellung zeigt die Figur 3. Das horizontale Traggerüst 12 ist nach Figur 2 in seiner äußersten Stellung in die schiffsseitige Richtung ausgefahren. Die entgegengesetzte Stellung ist durch die unterbrochenen Linien dargestellt.
Die beiden Förderer 1 und 2 werden bei Bedarf gemeinsam mit den verschiebbaren Elementen des Traggerüstes verstellt, dabei bleiben die Längen der beiden vertikalen Förderabschnitte sowie des horizontalen Förderabschnittes gleich. Somit ändert sich die Gesamtlänge des Förderers nur um den Betrag, der zur Erzielung der erforderlichen Spannung der Förderseile 8 erforderlich ist.
Am unteren Ende des Förderturms 13 und des Förderschachtes 14 sind die Stationen 5 und 6 zur Be- bzw. Entladung mit einem u-förmigen Rollgang ausgebildet, der als Belade- bzw. Entladeschleife 15 zum Ein- bzw. Ausschleusen der Lastaufnahmeeinrichtungen 3 und 4 dient. Zum selbsttätigen Zuführen bzw. Herausziehen der Lastaufnahmeeinrichtungen 3 und 4 werden technische Hilfsmittel wie Hydraulikzylinder vorgesehen, wodurch ein automatisiertes bzw. teilautomatisiertes Einbzw. Ausschleusen möglich wird. Jeder der beiden Belade- bzw. Entladeschleifen 15 ist mit dem Förderturm 13 bzw. dem Förderschacht 14 durch ein längsverschiebliches Zwischenstück 16 zur Anpassung an das Fördernieveau verbunden, um ein sicheres Ein- bzw. Abhängen der Lastaufnahmeeinrichtungen 4 und 5 zu gewährleisten.

Beim Entladen eines Schiffes wird der Förderturm 13 in die Luke eingefahren und die Belade bzw. Entladeschleife 15 in Arbeitsstellung gebracht. Danach werden über den Beladeförderer 1 leere Förderkörbe 4 zugeführt. Sie werden an der Station zur Entladung 5 auf der Beladeschleife 15 abgestellt und mittels Gabelstapler mit den Massenstückgütern beladen. Der volle Förderkorb 3 wird danach in den Aufnahmebereich des Entladeförderers 2 gebracht und selbsttätig an der Aufhängung in den Förderprozeß eingeschleust. Die volle Lastaufnahmeeinrichtung 3 wird bis zur Station 6 zur Entladung befördert, auf der Entladeschleife 15 abgesetzt und der Mitnehmer klinkt aus. Von dort wird der Förderkorb 3 durch einen Gabelstapler entladen und danach durch den anderen Förderer 1 wieder zurück zum Schiff transportiert.
Der Förderturm 13 wird bei Bedarf immer in die günstigste Position gebracht.
Das Beladen eines Schiffes erfolgt in umgekehrter Richtung.

Der Förderer kann auch in spezifizierter Ausführung zum Be- oder Entladen von Landfahrzeugen oder zum anderweitigen Transport von Massenstückgütern zwischen zwei Orten vorgesehen werden.

Geeignete Massenstückgüter können auch ohne besondere Lastaufnahmeeinrichtungen 3 und 4 gefördert werden. Dazu sind die Querverbindungen 7 mit solchen Mitnehmern und Tragelementen zu versehen, an die die Last entweder direkt oder an ihrer Verpackung angehangen wird. Da hierfür keine Rückführung der leeren Lastaufnahmeeinrichtungen 4 erforderlich ist, können beide einzelne Fördersysteme zum Transport in eine Richtung genutzt werden.

## Patentansprüche

1. Förderer zum Transport von Massenstückgütern mit ständig umlaufenden endlosen Zug- und Tragelementen (8), die mit Elementen zum Aufhängen von Lastaufnahmeeinrichtungen (3) und (4) versehen sind, der Förderer (1) und (2) horizontale und vertikale Transportabschnitte aufweist, die Länge der endlosen Zug- und Tragelemente (8) innerhalb eines Spannbereiches konstant ist, Abschnitte zum Ein- und Ausschleusen der Lastaufnahmeeinrichtungen (3) und (4) vorgesehen sind und der Förderer in einer Stahlkonstruktion untergebracht ist, die aus einem portalartigen Grundgerüst (11), einem längsverschieblichen horizontalen Traggerüst (12) und einem schiffsseitigen vertikalen Förderturm (13) sowie einem kaiseitigen Förderschacht (14) besteht, wobei der Förderturm (13) gegenüber dem horizontalen Traggerüst (12) in der Höhe verschiebbar ist, und der Förderer (1) und (2) mit der Stahlkonstruktion ein Umschlaggerät bildet, dadurch gekennzeichnet, daß die Zug- und Tragelemente (8) paarweise angeordnet und als Mitnehmer ausgebildete Querverbindungen (7) in gleichmäßigen Abständen zur Aufnahme von Lastaufnahmeeinrichtungen (3) und (4) vorgesehen sind und der Förderer (1) und (2) innerhalb eines Spannbereiches einen horizontalen Transportabschnitt und zwei vertikale Transportabschnitte mit insgesamt konstanter Länge aufweist, wobei der schiffsseitige vertikale Transportabschnitt gegenüber dem horizontalen Transportabschnitt in der Höhe veränderbar ist und zwischen dem kaiseitigen vertikalen Transportabschnitt gegenüber dem horizontalen Transportabschnitt eine horizontale Verschiebbarkeit besteht, weil die Ablenk- und Umlenkrollen des Förderers (1) und (2) mit den entsprechenden verschieblichen Baugruppen der Stahlkonstruktion verbunden sind und der Förderschacht (14) mit dem Grundgerüst (11) eine Einheit bildet.

2. Förderer nach Anspruch 1, dadurch gekennzeichnet, daß das Fördersystem von zwei parallel zueinander in der Tragkonstruktion angeordnete Einzelförderer (1) und (2) gebildet wird und die Förderrichtungen getrennt voneinander bestimmbar sind.

3. Förderer nach den Ansprüchen 1 und 2, dadurch gekennzeichnet, daß der Transport von vollen Lastaufnahmeeinrichtungen (3) in die eine Richtung und die Rückführung der leeren Lastaufnahmeeinrichtungen (4) in die entgegengesetzte Richtung vorgesehen ist.

4. Förderer nach den Ansprüchen 1 und 2, dadurch gekennzeichnet, daß die zwei Einzelförderer (1) und (2) zum Transport in eine gemeinsame Richtung vorgesehen sind.

5. Förderer nach den Ansprüchen 1 bis 4, dadurch gekennzeichnet, daß sowohl eine kontinuierliche als auch intermittierende Arbeitsweise der Förderer (1) und (2) vorgesehen ist.

6. Förderer nach den Ansprüchen 1 bis 5, dadurch gekennzeichnet, daß zum Ein- und Ausschleusen der Lastaufnahmeeinrichtungen (3) und (4) oder der Massenstückgüter an den unteren Enden der vertikalen Förderabschnitte Aufgabe- bzw. Abgabestationen vorgesehen sind, die aus einer von einem Rollengang gebildeten Belade- bzw. Entladeschleife (15) bestehen und Mittel zum selbsttätigen Zuführen bzw. Herausziehen vorgesehen sind.

7. Förderer nach den Ansprüchen 1 und 2 sowie 4 bis 6, dadurch gekennzeichnet, daß die Querverbindungen (7) mit solchen Mitnehmer- bzw. Tragelementen ausgebildet sind, die die Massenstückgüter entweder direkt oder an ihrer Umhüllung aufnehmen.
